Europäisches Patentamt

European Patent Office

Office européen des brevets

(19)

(11) Publication number: **0 230 383**
A2

(12) # EUROPEAN PATENT APPLICATION

(21) Application number: 87300382.6

(22) Date of filing: 16.01.87

(51) Int. Cl.⁴: **G 06 F 7/48**, G 06 F 7/548,
G 06 F 9/38

(30) Priority: 17.01.86 US 819638

(43) Date of publication of application: 29.07.87
Bulletin 87/31

(84) Designated Contracting States: CH DE LI SE

(71) Applicant: Martin Marietta Corporation, 6801 Rockledge
Drive, Bethesda Maryland 20817 (US)

(72) Inventor: Germann, Lawrence McMichael, 7901 Oxford
Road, Longmont Colorado 80501 (US)
Inventor: Thomas, Howard Michael, 1001 Haystack
Road, Castle Rock Colorado 80104 (US)

(74) Representative: Cotter, Ivan John et al, D. YOUNG &
CO. 10 Staple Inn, London WC1V 7RD (GB)

(54) Sequentially performing arithmetic operations on data sets.

(57) Data sets (X, Y, Z) along with associated instructions
from an instructions register (IR) are sequenced through an
arithmetic processing unit (APU) for performing a plurality of
arithmetic operations on each of the data sets in accordance
with an associated instruction. The arithmetic processing
unit has a plurality of interconnected computational pipe-
lines each including a plurality of groups (80X, 80Y, 80Z, 82X,
82Y, 82Z, etc.) of arithmetic elements arranged to perform a
sequence of arithmetic operations on the data set in accor-
dance with the associated instruction. The data sets and the
associated instructions are applied to the processing unit for
propagation therethrough such that the instruction propa-
gates through pipelined instruction registers (84R, 86R) in
sequence with the data set propagating through the
pipelined arithmetic elements.

1

# SEQUENTIALLY PERFORMING ARITHMETIC
## OPERATIONS ON DATA SETS

This invention relates to apparatus (sequencer) for sequentially performing a plurality of arithmetic operations on each of a plurality of data sets.

The invention will be described herein, by way of illustrative and non-limiting example, in conjunction with sequencing the operation of a pipelined arithmetic processing unit employing Cordic techniques. However, it is to be appreciated that the invention may be applied to sequencing the operation of other arithmetic units wherein the data is pipelined through several add or subtract stages and the like.

Pipelined arithmetic units have become increasingly common in the last several years. They are frequently used in high speed computers, arithmetic processors and signal processors. A disadvantage inherent in such units is that they frequently operate such that the results of a given operation cannot be used in the next operation. Thus, in general, for an arithmetic unit (AU) pipelined by N stages deep, results are not available at the end of the last stage for N operations. Consequently, this limits applications of such arithmetic units to those where data latency can be tolerated or where identical operations can be performed on an array of data. The first restriction is a problem during the software design processing and usually results in lost performance. The second restriction limits the scope of the application to certain processors, such as vector processors, and additionally precludes data dependent branching commonly required by real time systems.

US Patent No. US-A-4 393 468 (B.J. New) discloses a signal processor employing a microprogram sequencer and which is used in conjunction with controlling the operation of a plurality of parallel functions, including that of propagating data through a chain of registers. However, there is no disclosure suggestive of a pipelined microprogram sequencer which operates synchronously with a pipeline processor permitting concurrent execution of independent programs as in the case of the apparatus disclosed in this application.

US Patent No. US-A-4 231 102 (P.C. Barr et al) discloses an apparatus for performing a Fourier transform using Cordic techniques. In the apparatus of US-A-4 231 102, digital words are pipelined through serial add-substract stages to provide vector rotations without trigonometric lookup tables or multiplying operations. However, the apparatus of US-A-4 231 102 executes only one program at a time and sequences only data through the Cordic computer and does not sequence instructions therethrough along with the data.

According to the invention there is provided apparatus for sequentially performing a plurality of arithmetic operations on each of a plurality of data sets, each including at least two variables, in accordance with an instruction word for each data set, the apparatus comprising:

an arithmetic processing unit having input register means for receiving and temporarily storing a data set including at least first and second multi-bit digital words representing first and second variables and an associated multi-bit instruction word providing computational instructions for the associated data set, at least first and second interconnected computational pipelines each including a plurality of groups of pipelined arithmetic elements, each group including a plurality of arithmetic elements arranged to perform a sequence of arithmetic operations on a said data set in accordance with the associated said instruction word, and a resultant register for temporarily storing the computational results of said group, and an instruction pipeline including a plurality of pipelined instruction registers, one for each said group, and arranged in a sequence so as to sequentially receive said instruction word as the associated data set is sequentially received by said resultant registers; and,

means for sequentially supplying a plurality of data sets and a like plurality of associated instruction words to the arithmetic processing unit so that each said instruction word propagates through the processing unit in sequence with its associated data set.

A preferred embodiment of the present invention described hereinbelow provides a sequencer for pipelined arithmetic units wherein both data and programs are sequenced through the various stages, permitting zero data latency, data dependent branching and other data formats to be used in conjunction with a pipelined arithmetic unit. The preferred sequencer permits programs to operate without the data latency restriction of the prior art by alternating arithmetic unit operations between each of a set of concurrent logical processors.  In the preferred sequencer for such arithmetic units, each logical process may execute an independent program.

The invention will now be further described, by way of illustrative and non-limiting example, with reference to the accompanying drawings, in which:

Fig. 1 is a block diagram illustration of one application of the present invention;

Fig. 2 is a schematic block diagram illustration of a sequencer in accordance with a preferred embodiment of the invention;

Fig. 3 is a schematic block diagram illustration of an instruction decode and timing control circuit shown in Fig. 2;

Fig. 4 is a timing chart showing the operation of a timing generator shown in Fig. 3;

Fig. 5 is a more detailed schematic block diagram illustration of a program memory and related circuitry of the sequencer of Fig. 2;

Fig. 6 is a bit map useful in explaining the operation of the sequencer;

Fig. 7 is a more detailed schematic block diagram illustration of a data memory and related circuitry of the sequencer of Fig. 2;

Fig. 8 is a schematic block diagram of an arithmetic processing unit shown in Fig. 2;

Fig. 9 is a schematic block diagram of skip select logic circuitry shown in Fig. 2; and

Fig. 10 is a schematic block diagram of an interface control unit shown in Fig. 2.

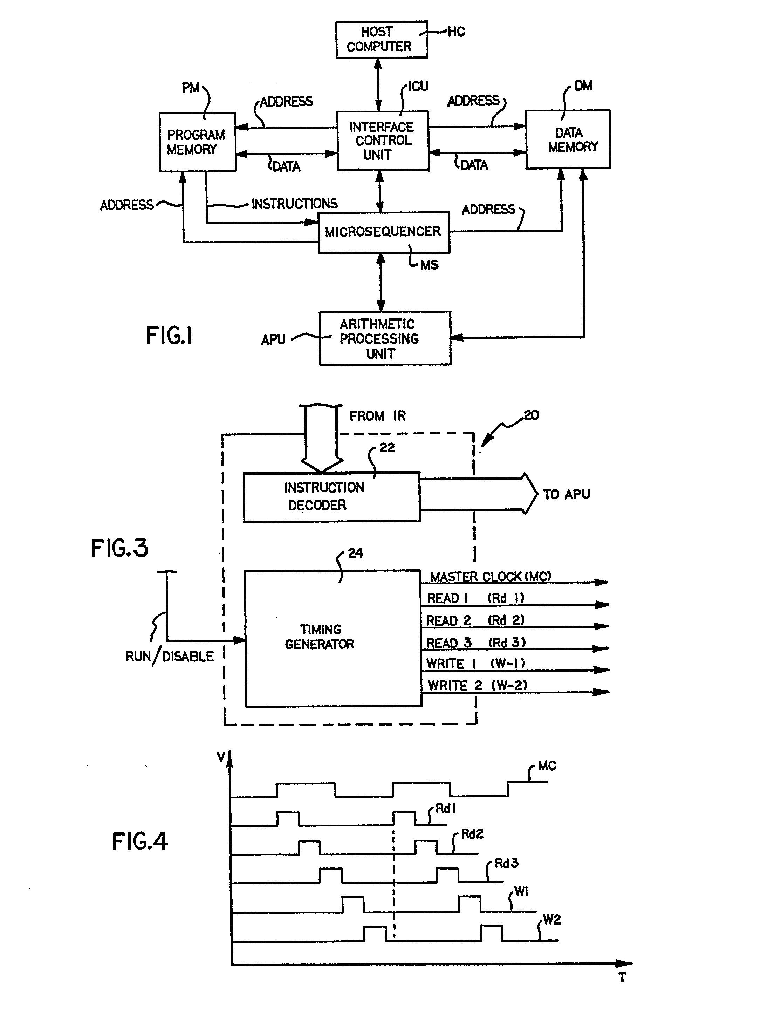

Fig. 1 is a functional block diagram illustrating one application of the present invention to controlling the sequence of operation of an arithmetic processing unit APU, which, in the example to be described herein, includes a plurality of pipelined calculating stages which serve to perform a coordinate transformation.  The arithmetic processing unit APU may be employed for solving the Cordic algorithm in conjunction with computation bound signal processing, image processing and real time control applications. One practical example is in conjunction with solving coordinate transformation problems involved in the solution of the joint angles of a

4   0230383

6-degree-of-freedom articulated robot arm. As is known, for example, from US Patent No. US-A-4 231 102, supra, the Cordic equation requires only binary shift and addition-subtraction operations. It is therefore ideal for high speed operation. In one aspect, the algorithm can be described as a vector rotation accomplished by a step-by-step sequence of psuedo rotations of predetermined angles, decreasing in magnitude. After each iteration, a logic decision is made as to the direction of rotation, so that each rotation is directed towards the desired result. For example, in a rectangular-to-polar coordinate conversion, a solution will start commencing with the X and Y components of a vector and return the vector's length R and the angle of rotation T from the X axis. The algorithm does this conversion by rotating the vector so it lies on the positive X axis. When the vector lies on the X axis, its magnitude equals its X component which can be read directly. The angle T is the angle through which the vector was rotated. The Cordic algorithm rotates the vector in a series of steps; first by an angle $\pm A_0$, then by an angle $\pm A_1$ through an angle $\pm A_N$. All the angles $A_0$, $A_1$ . . . $A_N$ are predetermined, but their signs are not. For the rectangular-to-polar conversion example, in each step in the series of calculations, the sign of the angle is chosen to be opposite to the sign of the current Y component of the vector. This makes sure that the vector is always rotated towards the positive X axis. In effect, the vector is rotated in one direction until it overshoots and then it is reversed and rotates in the other direction until it overshoots again. The vector approaches the X axis in progressively smaller steps. After N rotations, the vector lies on the X axis and T equals the sum of the rotations.

The Cordic equation may also be employed to provide a rotate conversion by which the processing units receive the X and Y components of a vector in Cartesian coordinates and a rotation angle of T. It returns as a solution the X and Y components of the vector rotated counterclockwise about the origin by the angle T. A small change is employed in the algorithm for this conversion from that of the rectangular to polar conversion. In the rectangular to polar conversion, the algorithm decides at each step which way to rotate by examining the sign of the vector's current angle (T). For the rotate conversion technique, the same rotation method is employed but with a different decision rule. Thus, if the sign of T is "+", rotate counterclockwise and subtract $A_i$ from T. If the sign of T is "-", rotate clockwise and add $A_i$ to T. Thus, the rectangular to polar conversion rule tends to "null" the Y component of the vector. On the other hand, the rotate rule attempts to "null" T. Either way, the effect is to rotate in one direction until an overshoot condition takes place and then rotate the other way until an overshoot takes place, etc. The vector rocks back and forth in progressively smaller steps. After N rotations, the net rotation is T. The arithmetic processing unit itself will be described in greater detail hereinafter.

Having now briefly described the function to be performed by the arithmetic processing unit APU, attention is more specifically directed hereinafter to a microsequencer MS (Fig. 1) which serves to control the operation of the arithmetic processing unit APU so that both data as well as instructions are pipelined through the arithmetic processing unit, as opposed to known prior art methods in which such an arithmetic processing unit is limited to executing but a single program through its pipelined stages.

Data to be transformed by the arithmetic processing unit APU is contained in a host computer HC. The data to be transformed is down loaded in blocks by way of an interface control unit ICU for temporary storage in a data memory DM. The program instructions as to what to do with the data may also be downloaded by way of the interface control unit and stored in a program memory PM. The microsequencer MS utilizes the program instructions in the program memory PM to control the APU to operate on the data to be transformed, obtained from the data memory, DM to perform the transformation. The transformed data is then written back into the data memory DM and, under the control of the interface control unit ICU, is transmitted back to the host computer HC.

More specifically and with reference to Fig. 1, the host computer HC, during an initialization period, downloads instructions by way of the interface control unit ICU to the program memory PM, which memory may be 80 bits wide and 2K (2048) long such that it may store 2,048 80 bit instructions. Since a typical 6-degree-of-freedom robot transformation algorithm may take only 100 instructions, the program memory PM is more than capable of handling most complex algorithms.

The data to be transformed is downloaded from the host computer HC into the data memory DM under control of the interface control unit ICU. The data memory DM preferably takes the form of a read/write random access memory which can store up to 4,096 data words, each being of 32 bits length. The operation commences upon initiation of the microsequencer MS by the interface control unit ICU and the microsequencer then fetches instructions from its program memory PM and then executes the indicated instruction. The data to be transformed is obtained from the data memory DM by the microsequencer MS and supplied to the arithmetic processing unit APU where each set of data is operated upon in accordance with the instruction that floats through the arithmetic processing unit along with the data set. The transformed data outputted from the arithmetic processing unit is then written back into the data memory DM under control of the microsequencer MS which then signals the interface control unit ICU that the algorithm has been completed and the interface control unit ICU signals the host computer HC that the transformed data is ready to be transmitted to the host computer. The data is then transferred back to the host computer HC. The data memory DM could be a dual memory used to minimize the effect of data transfer overhead by permitting concurrent execution of instructions by a microsequencer and data transfer between the host computer and the interface control unit ICU. The details of the arithmetic processing unit APU will be described in greater detail hereinafter.

It is to be noted that the unit APU in the example given herein serves to perform one of six operations on a set of three 32 bit digital words representing X, Y and Z, and then outputs two 32 bit digital words R and T. The six operations that may be performed are categorized into three groups of two each, depending upon which coordinate system that the operations use: circular, linear, or hyperbolic. In the circular coordinate system, the operations are coordinate rotation, from which one can extract sine and cosine, or rectangular-to-polar conversion, from which one can extract inverse tangent and square root of the sum of the squares. In the linear coordinate system, the operations are addition and multiplication, or addition and division. Finally, in the hyperbolic coordinate system, the operations are hyperbolic rotation, from which one may extract hyperbolic sine and cosine, or hyperbolic rectangular-to-polar conversion, from which one may extract inverse hyperbolic tangent and the square root of the difference of squares.

The embodiment of the arithmetic processing unit APU disclosed therein has a pipelined structure that enables it to

0230383

do separate operations on eight sets of data simultaneously. The instructions for each set of data, X, Y and Z, are kept with the data. Thus, as the data are passed from one section of the pipeline to the next, the previous section receives not only new data, but perhaps a completely different instruction of what operation is to be performed on the new set of data. Since there are eight sets of pipes, eight independent sets of data can be processed simultaneously. Thus, when 1,000 sets of data are sequenced through the arithmetic processing unit, only 1,008 clock cycles are required. Even though for this system it takes 2.0 microseconds for each datum to be converted, the pipeline architecture allows 1,000 points of data to be processed in 0.252 milliseconds rather than the 2.0 milliseconds it would take without the pipeline.

Microsequencer

Having now generally described the application of the microsequencer MS in conjunction with Fig. 1, attention is directed to a specific description of the circuitry employed with reference to Figs. 2-10. The overall diagram is illustrated in Fig. 2 which shows the microsequencer MS communicating with the interface control unit ICU as well as with the data memory DM, the program memory PM, and the arithmetic processing unit APU. As will be explained in greater detail herein, the interface control unit ICU downloads instructions into the program memory PM and data to be transformed into the data memory DM. The program memory PM is capable of storing 2K 80 bit instructions. These may be downloaded by the interface control unit ICU by raising its write line 10 and supplying addresses on its address bus AB-1 for writing data in the form of 80 bit instructions into the memory at the addresses indicated by the address bus AB-1. The instructions may be outputted from the interface control unit ICU on its instruction bus IB. Each of these instructions is 80 bits in length. The data to be transformed may be downloaded into the data memory DM by the interface control unit ICU supplying addresses on another address bus AB-2 which is supplied through a multiplexer 14 to the address input of the data memory DM. The data to be transformed may then be written into the addressd locations of the data memory DM when the interface control unit ICU raises its read/write control line 12 which is supplied to the data memory. The data appearing on a data bus DB is supplied by the interface control unit ICU and written into the data memory DM at the address provided by the address bus AB-2.

With the data to be transformed loaded into the data memory DM and the instructions loaded into the program memory PM, the interface control unit ICU may now raise its run/disable line which activates timing circuitry located in an instruction decode and timing control 20. This will permit a timing generator therein to output various clock and control pulses. The instruction decode and timing control 20 is illustrated in detail in Fig. 3 from which it will be seen that an instruction in the form of a 6 bit code is decoded by an instruction decoder 22 which is then routed directly to the arithmetic processing unit APU. The timing generator 24 is activated when the interface control unit ICU raises its run/disable line and outputs a master clock MC together with various control pulses as indicated in the timing chart of Fig. 4. This includes three read control pulses and two write control pulses during each machine cycle. The three read pulses are referred to as read 1, read 2 and read 3 (Rd1, Rd2 and Rd3) and the write pulses are referred to as write 1 and write 2 (W1 and W2). In the example being illustrated herein, the arithmetic processing unit solves the Cordic algorithm which includes data sets of three data words X, Y and Z to be operated upon in accordance with an accompanying instruction, and the outputted results are two data words R and T. Consequently, during each machine cycle, a set of input data words X, Y and Z are read from the data memory DM and supplied to the arithmetic processing unit APU along with the accompanying instruction for the transformation and, from the output of the pipelined elements in the processing unit, two outputs R and T are obtained which are written into the data memory DM.

## Program Memory

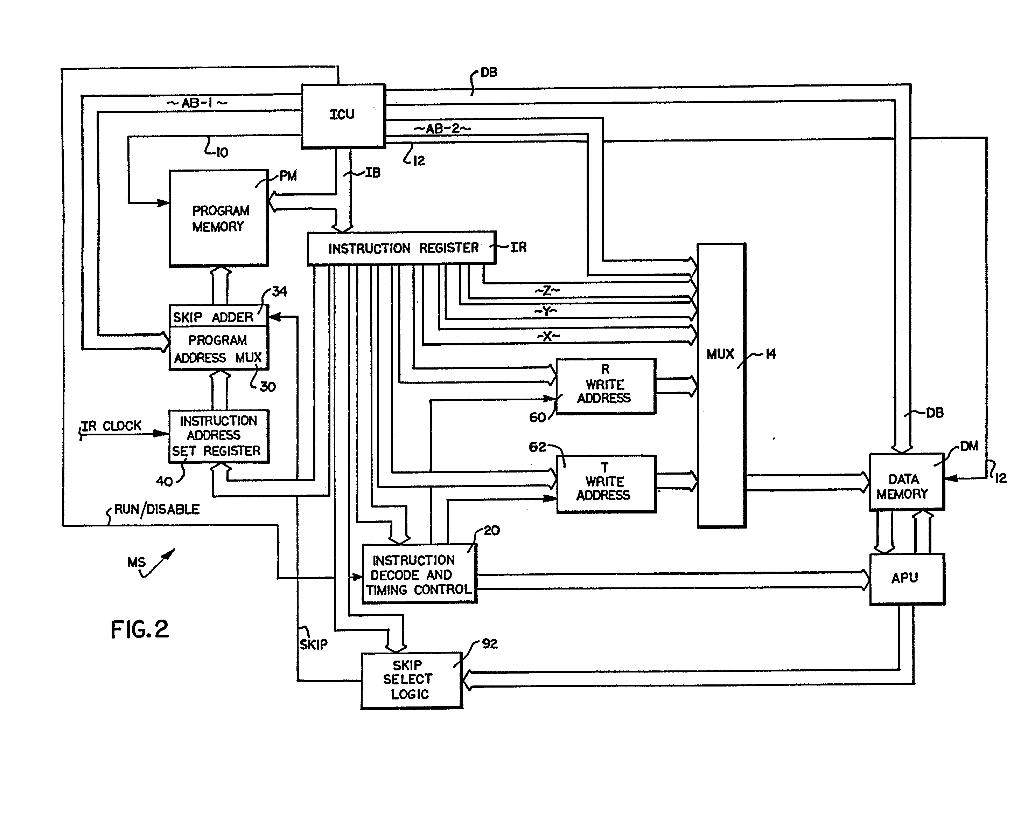

The loading of the program memory PM by the interface control unit ICU may be more readily understood with reference to Figs. 2 and 5 to which attention is now directed. Data is loaded into the program memory PM by the interface control unit ICU raising its write line 10 to the program memory PM and supplying an address on its address bus AB-1 which is supplied as one input to a multiplexer 30. The multiplexer 30 will pass the addresses on the address bus AB-1 so long as the interface control unit ICU raises its control line 32. The addresses are then supplied to the program memory PM by way of a disabled adder (skip adder) 34 so that the data on the data bus IB is written into the program memory PM at the address supplied. This continues until the program memory PM has been fully loaded. Thereafter, the interface control unit ICU supplies 11 bit addresses for initial addressing of the program memory PM by way of an instruction register IR. Eight 11 bit addresses are supplied for accessing eight different 80 bit instruction words from the program memory PM.

The eight addresses for addressing the program memory PM are stored in eight different registers, one of which includes 11 bit positions of the instruction register IR. The other seven 11 bit addresses are stored in a seven stage shift register which is hereinafter referred to as the next address register 40. These are loaded by the interface control unit ICU dropping its write signal on its read/write line 10 and outputting a series of eight clock pulses, IC pulses, and eight 11 bit data words. The interface clock pulses are supplied as shift pulses to the shift register 40 by way of an OR gate 42 and also as clock pulses to the instruction register IR. With each clock pulse·IC, the interface control unit ICU outputs data on its instruction bus IB of which only eleven bits are supplied to the input shift register IR and clocked in by way of the clock pulse. After eight clock pulses, eight eleven bit addresses are stored, seven being stored in the register 40 and one being stored in the instruction register IR. The first address will be shifted to the last register in this series so that upon start up conditions, that address will be outputted by way of the multiplexer 30 and the adder 34 to address the program memory PM. Thereafter, the interface control unit ICU raises its run/disable signal so that the timing generator 24 outputs the master clock MC which will then be used to control the load and shifting functions of the register 40 and the instruction register IR.

Read-Write Data Memory.

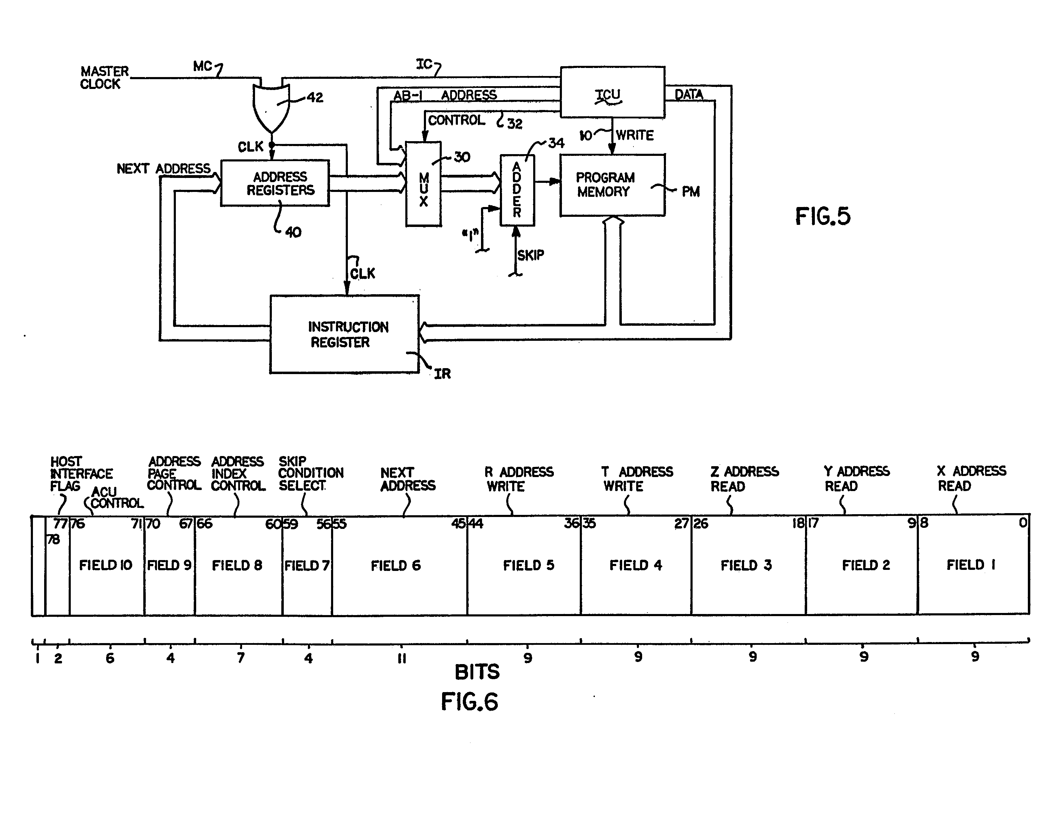

After the interface control unit has loaded data into the data memory DM and program instructions into the program memory PM and program addresses into the next

0230383

address register 40, as well as one additional address in the instruction register IR, it will raise its run/disable line to activate the timing generator 24. An 80 bit instruction word will now be fetched from the program memory PM and loaded into the 80 bit instruction register IR. Each instruction word has ten multibit fields together with two bits designating a host interference flag and one bit (the most significant bit MSB) is unused. A bit map is illustrated in Fig. 6, which illustrates these fields. Fields 1, 2 and 3 are each nine bit fields containing an X address read, a Y address read and a Z address read. These are used to address the data memory DM to obtain a set of input data X, Y and Z. The next two fields, fields 4 and 5, contain the R address write and T address write data words, each of which is nine bits long. These are used to address the data memory DM for writing the results of an arithmetic process into the data memory at the addresses commanded. Field 6 contains an eleven bit data word which provides the next address data word and this is supplied to the next address register 40. Field 7 is a four bit data word which is used to select one of 16 different skip select conditions, to be described in greater detail hereinafter. Field 8 contains a seven bit address for use in index control. Field 9 contains a four bit data word for use in address page control. Lastly, field 10 contains six bits which define the arithmetic processing unit instruction as to what arithmetic operation is to be performed on the input data X, Y and Z. This arithmetic instruction is passed through the arithmetic processing unit APU in synchronism with the related input data X, Y and Z.

As previously explained, during each machine cycle, three read operations and two write operations take place. In addition, the interface control unit ICU can interrupt by lowering the run/disable line to turn off the master clock MC and take control of reading or writing data from or into the data memory DM.

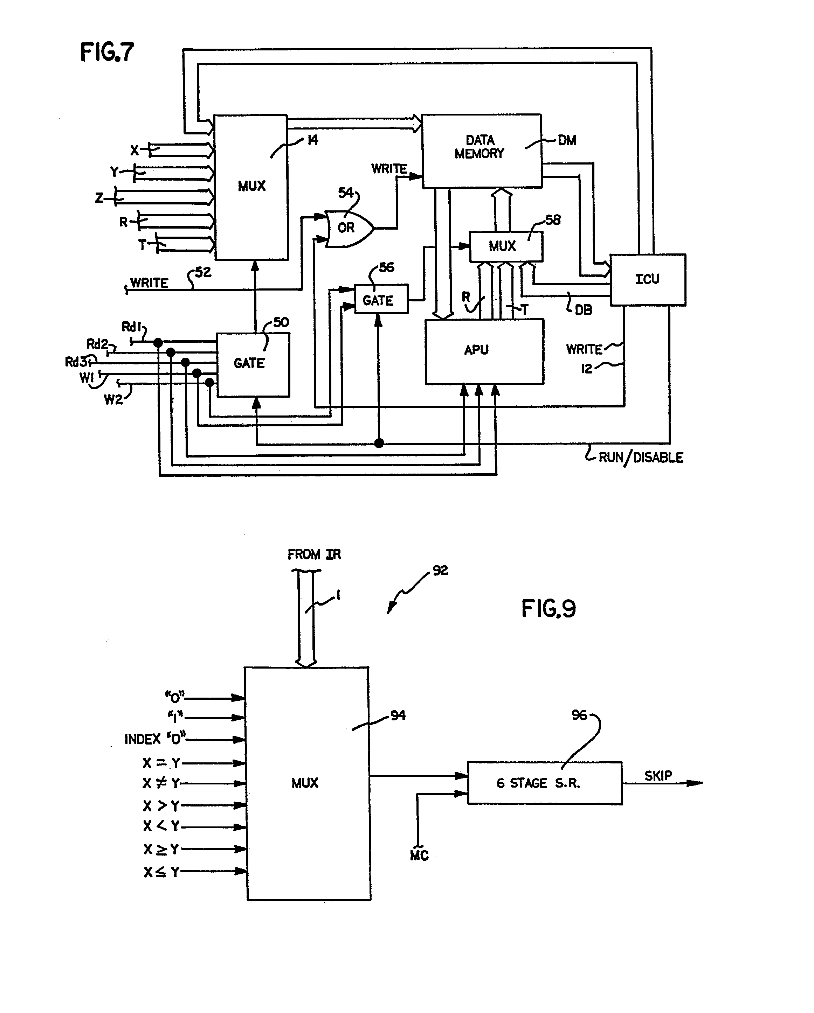

Reference is now made particularly to Figs. 2 and 7. As shown in these figures, X, Y and Z addresses are supplied by the instruction register IR for addressing the data memory DM. These addresses are supplied to the multiplexer 14 which, in turn, supplies the addresses one at a time to the data memory DM when gated by a logic gate 50. The gate 50 receives the timing signals for read 1 (Rd1), read 2 (Rd2), read 3 (Rd3), write 1 (W1) and write 2 (W2) operations from the timing generator 24. These are then used to trigger the multiplexer 14 so that the X address, Y address and Z address are sequentially supplied to the data memory DM. This input set of data is accessed from the data memory DM and written into individual registers for the X, Y and Z data words within the arithmetic processing unit APU when the registers for receiving these data words are clocked by the read 1, read 2 and read 3 clock signals.

The transformed data R and T is outputted from the arithmetic processing unit APU and written into the data memory DM at the R address and the T address obtained from the instruction register IR. These are clocked into the data memory DM when a write line 52 is raised and this is passed by an OR gate 54 to actuate the write input of the data memory DM. The write timing signals or clock pulses are passed by a gate 56 which actuates a multiplexer 58 so that the data words R and T are separately written into the data memory DM at the R address and the T address in synchronism with the write 1 (W1) and write 2 (W2) timing signals.

The interface control unit ICU may read data out of the data memory DM by dropping its run/disable line to turn off the timing generator 24 (Fig. 3) and supplying an address to the input of the multiplexer 14 which will then be directly passed by the multiplexer to address the data memory DM and the data may be outputted to the interface control unit which may then, in turn, pass the transformed data R and T to the host computer HC.

The interface control unit ICU may also write the data into the data memory DM at selected addresses by lowering the run/disable line to turn off the gate 50 as well as the timing generator 24 (Fig. 3) and then provide a write command by raising its read/write line 12, and this is supplied by way of the OR gate 54 to the write input of the data memory

DM.  Data on its data bus DB may then be supplied by way of the multiplexer 58 to be written into the selected address in the data memory DM.

Reference is now made to Fig. 2 from which it will be noted that write address registers 60 and 62 have been provided for receiving the R address and the T address from the instruction register IR prior to supplying these addresses to the multiplexer 14.  The registers 60 and 62 are each eight stage shift registers so that a delay of eight machine cycles takes place from the loading of a write address into the register before the write address is supplied by way of the multiplexer 14 to the data memory DM. In this manner, a delay is built into the system corresponding with the time delay for the transformation process in the arithmetic processing unit APU.  In the arithmetic processing unit APU, there are eight registers through which the arithmetic process is clocked.  The time delay, then, corresponds with that of clocking eight registers and this is the time delay built into the write address registers 60 and 62.  Consequently, the registers 60 and 62 may be supplied with a shift signal taken from the master clock MC so that the eight machine cycles after the transformation of the X, Y and Z data words takes place is written into the selected locations of the data memory DM.  The write pulses in synchronism with the master clock may be write 1 (W1) and write 2 (W2) taken from the timing generator 24 (see Figs. 3 and 4.) The write 1 (W1) pulse train may then be used as shift pulses for the addresses registers 60 and the write 2 (W2) pulses may be used as the shift pulses for the registers 62.

## Arithmetic Processing Unit

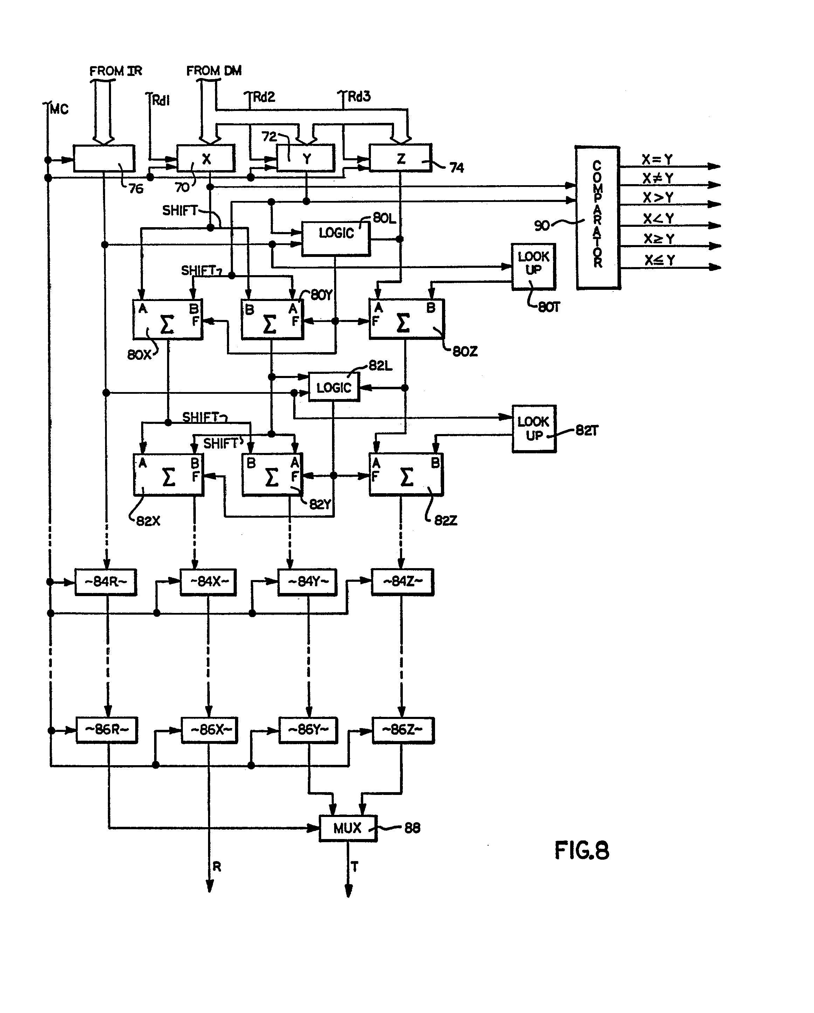

The arithmetic processing unit APU is illustrated in greater detail in Fig. 8, to which attention is now specifically directed. During each machine cycle or clock cycle of the master clock MC, three digital words are supplied to the arithmetic processing unit as well as an instruction word for instructing the arithmetic processing unit as to what arithmetic operation should be performed on the three digital words. Also, during each machine cycle, transformed data, including two digital words, are outputted from the arithmetic processing unit and written into the data memory DM. The data to be written into the arithmethic processing unit for transformation includes an X word, a Y word and a Z word. These are supplied to the arithmetic processing unit from the data memory DM during the memory read operation discussed hereinabove. At the arithmetic processing unit (Fig. 8), the X data word is loaded into a 32 bit dual rank register 70 when the read 1 line is raised. Similarly, the 32 bit Y data word is loaded into a dual rank Y register 72 when the read 2 line is raised. A third data word referred to as the Z data word is written into a Z register 74 when the read line 3 is raised. The master clock MC then transfers X, Y, Z to the register outputs simultaneously. The instruction from the instruction register IR may be a six bit data word (see Fig. 6) which during each cycle of the master clock is loaded into an input register 76 in the arithmetic processing unit. This instruction word dictates what arithmetic operation is to take place on the input data words X, Y and Z.

The arithmetic processing unit includes several arithmetic stages which are pipelined with each stage providing one arithmetic operation. In solving the Cordic equation, for example, each stage provides one rotational increment. In the example herein, 32 such stages may be employed. For purposes of simplification, a few of these are illustrated in Fig. 8.

As illustrated in Fig. 8, each stage in a pipeline includes a summing circuit, sometimes referred to hereinafter as an adder, which serves to receive a pair of digital words and provide either a binary addition or a binary subtraction function and output the result. Three parallel pipelines are illustrated in Fig. 8, which may be considered as the X pipeline, the Y pipeline and the Z pipeline. Thus, the first stage includes pipeline adders 80X, 80Y and 80Z. An A input of the pipeline adders 80X and 80Y each receives the X and Y data word from the register 70 and 72, respectively, whereas a B input of each of these adders receives a shifted form of Y and X data words from the register 72, respectively. The data word entered into the B input of each adder may either be added to or subtracted from that entered into the A input depending upon whether the command input to a function input F of each adder calls for an addition operation or a subtraction operation. This may be achieved with a single line command obtained from a logic circuit 80L for this stage in the pipelines. The command from the logic circuit 80L may, for example, have a binary 1 level for commanding an addition process and a binary 0 level for commanding a subtraction process. The logic circuit 80L examines the Y data word and the Z data word from the registers 72 and 74 and, based on the algorithm to be solved, determines from whether these data words are representative of positive values or negative values as to whether the output command should be a binary 1 or a binary 0 signal. Additionally, the logic circuit 80L receives the six bit instruction word from the register 76 which, depending upon the specific algorithm to be implemented for the data words X, Y and Z, will determine the command provided by the logic circuit 80L to the adders 80X, 80Y and 80Z. Additionally, a constant may be supplied to the B input of the adder 80Z from a lookup table 80T associated with this stage of the pipeline registers. The lookup table 80T may take the form of a read only memory and depending upon the six bit instruction word obtained from the register 76 will provide a particular constant to the B input of the adder 80Z. It is to be noted in Fig. 8 that for purposes of simplicity, single lines are shown for supplying the data words from the registers to the various adders and the logic circuitry. It is to be kept in mind that each data word X, Y and Z is a 32 bit data word and hence each adder may receive two 32 bit data words for its arithmetic operation. The output commands from the logic circuits, such as the logic circuit 80L, may be single bit command words. As is well known, multiplication may be effected in such a system by providing hard wired binary shift operations thereby avoiding the use of clocking operations to achieve such binary shifts. This is indicated in the diagram of Fig. 8 by the shift labels thereon, each indicative of a hard wired binary shift to the right. This is employed in the wiring of the various stages to each other.

The arithmetic operations of one stage are applied to the next as is indicated in Fig. 8, where arithmetic operations at the adders 80X, 80Y and 80Z are supplied to A and B inputs of adders 82X, 82Y and 82Z. One exception to this is that the input to the B input of the adder 82Z is obtained from a lookup table 82T which provides a constant in accordance with the instruction from the register 76.

For purposes of simplification, only two adder stages 80 and 82 are illustrated in Fig. 8. For this system the stages are divided into groups of seven. The results of the seven stages, then, are loaded into pipelined registers 84X, 84Y and 84Z at the next clock pulse from the master clock MC. Additionally, the instruction in the register 76 is also loaded at this time into a register 84R so that the instructions for the data words X, Y and Z are pipelined through the arithmetic processing unit along with the data words X, Y and Z. With this same clock pulse, a new instruction is loaded into the input register 76 and during this same clock cycle new values of X, Y and Z data words are loaded into the input X, Y and Z registers 70, 72 and 74.

The pipeline stages continue beyond the registers 84 with additional stages of adders, such as the adders 80 and 82 illustrated in Fig. 8. Each additional group of adders, such as seven adders, places its contents into another set of registers, such as the registers 84X, 84Y and 84Z, and the instruction word for that set of data words is loaded into a companion register, such as register 84R. The master clock will also load a new set of instructions for new values of the X, Y and Z data words into the registers 70, 72 and 74. In the example being described herein, there are eight sets of registers, such as the registers 84, providing in effect eight pseudoprocessors for processing data. Five of those sets are located in the APU and the other three are located elsewhere in the system. These include five sets of registers in the APU, such as registers 84 and 86, as well as the input set of registers 76, 70, 72 and 74 (note only 3 sets of registers are shown in Fig. 8). Another set of registers, for storing an instruction as well as a data set, takes the form of the instruction register IR. The other two sets of registers are for use in floating point to fixed point conversion applications and vice versa, since the APU illustrated herein only operates on fixed point data. In such an application, then, a first set of registers, for floating point to fixed point conversion, is located in the data stream in front of or just prior to the ALU and a second set of registers, for fixed point to floating point conversion, is located in the data stream just after the ALU for converting the R and T data words from fixed point to floating point.

The last set of registers in the APU is illustrated in Fig. 8 as a register 86R, for receiving an instruction word, together with registers 86X, 86Y and 86Z for receiving the results of the X, Y and Z pipelines. At this point in time, the results of the arithmetic processing is available as data words R and T. The data word R is obtained from the X pipeline register 86X whereas the T data word is obtained from either the Y pipeline register 86Y or from the Z pipeline register 86Z. Which of the two the T data word is obtained from is dependent upon the type of arithmetic operation or transformation being accomplished. One bit from the instruction word in the register 86R will indicate which of the registers 86Y or 86Z contains the data word T and the single bit command may be supplied to a suitable multiplexer 88 to select the data word T from the proper register. The throughput time for the arithmetic processing unit may be on the order of 2.0 microseconds to achieve coordinate transformation of the data words X, Y and Z. However, since eight times as much data can now be processed by supplying eight different sets of instructions through the pipeline to the registers 76, 84R and 86R, etc., the processor operates as eight independent pseudoprocessors, each with a throughput time of 2.0 microseconds. Since eight times as much data can now be processed in the same length of time, the processor execution time has now been decreased from 2.0 microseconds to 250 nanoseconds.

The constants provided by the lookup tables 80T and 82T, etc. supply constants to the Z data adders 80Z and 82Z, etc. for use in solving the transformation algorithms. These constants, for example, in solving the Cordic algorithm may be angular relationships and may be expressed in radians or degrees and the like.

## Skip Select Logic

The microsequencer MS (Fig. 2) has the capability to conditionally skip the next instruction, depending on certain conditions. For example, if a data set has digital words X, Y and Z wherein the relationships between two of the variables such as X and Y satisfy certain conditions, it may be desirable to increment the address obtained from the address register 40 to obtain the next instruction from the program memory PM.

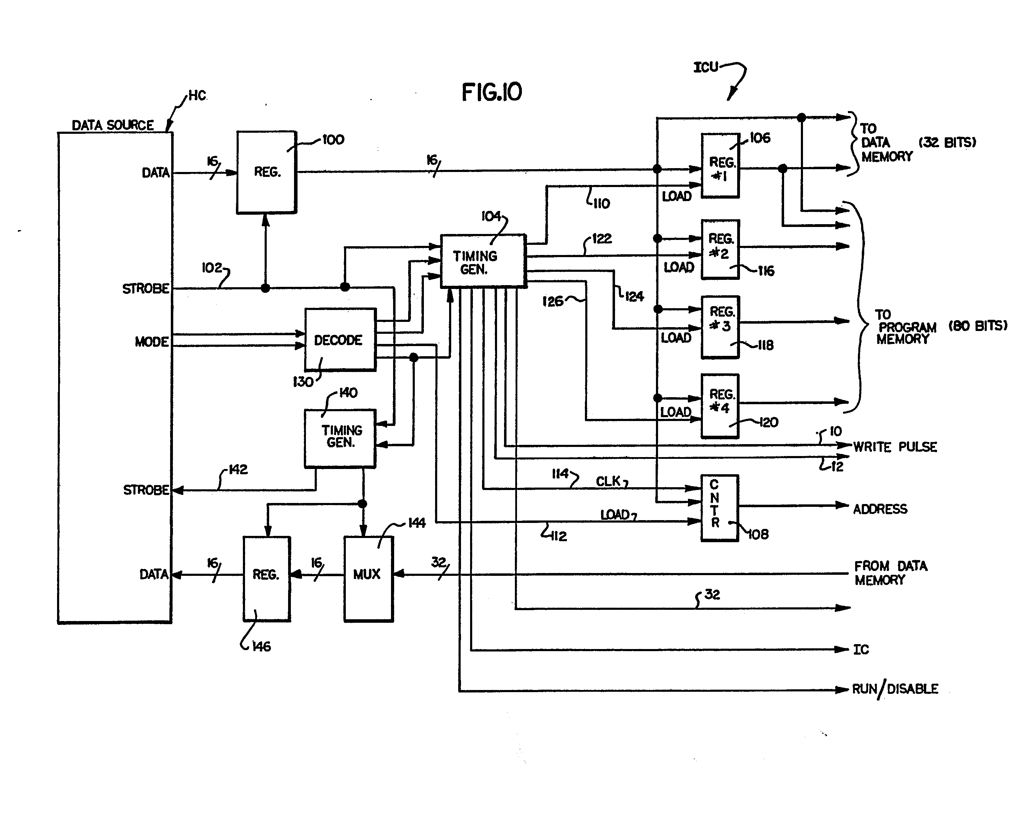

To accomplish this function, a comparator 90 (Fig. 8) receives the X data word and the Y data word as written into the X register 70 and the Y register 72 in the arithmetic processing unit. This comparator 90 compares the X and Y data words against various relationships between the two. In Fig. 8, the comparator has six one bit output lines, each of which will carry a binary 1 signal when a specific relationship takes place between the X data word and the Y data word as is indicated by the legends in Fig. 8. Thus, there is an output line for a comparison wherein X is equal to Y, another for a comparison wherein X is not equal to Y, another for a comparison which indicates that X is greater than Y, another when X is less than Y, another when X is equal to or greater than Y and another when X is equal to or less than Y. These condition lines are supplied to a skip select logic circuit 92 (see Fig. 2) which is illustrated in greater detail in Fig. 9.

The conditions obtained from the comparator 90 (Fig. 8) are supplied to the skip select logic circuit 92 and specifically to the input of a multiplexer 94. The multiplexer 94 has a four bit input received from the instruction register IR so that it may select one of 16 inputs to be outputted by the multiplexer. Consequently, the programmer can select whichever of 16 (only 9 used in this example) different conditions obtained from the comparator 90, or otherwise, to use as the basis for a skip function so that the instruction address register will address the next succeeding instruction word in the program memory PM. Among the inputs to the multiplexer 94 are the six conditions obtained from the comparator 90. Other inputs include a hardwired 0, which when selected means that no skip at all will be obtained. A still further input may be a hardwired binary 1 input which means that a skip is always obtained. An index function may be performed and when an index = 0 is supplied to one input of the multiplexer 94, no skip function will be performed. One of these inputs, up to a total of 16, may be selected from the four bit skip condition select program word obtained from the instruction register IR and either a binary 1 (skip command) or a binary 0 (no skip command) is outputted from the multiplexer 94. This is shifted into the first stage of a six stage shift register 96 by shift pulses obtained from the master clock MC. This serves as a delay function corresponding with the time delay through the pipeline registers. Since one set of data words is located in the arithmetic processing unit APU and the instruction register accounts for an additional delay, only six additional clock cycles need to be delayed to provide these skip commands for the next address. When the skip command is a binary 1 signal, it is supplied to the skip adder 34 (Fig. 5) which causes a binary 1 to be added to the address obtained from the address registers 40, whereby the address is incremented by a factor of 1 so as to skip to the next address in the program memory PM. This next instruction word from the program memory PM (80 bits) is then supplied to the instruction register IR for processing.

Interface Control Unit

The interface control unit ICU may take various forms to satisfy the functions described hereinbefore. One form that the interface control unit may take is illustrated herein in Fig. 10. For purposes of simplification, this figure illustrates multiple bit lines as single lines, but in such case the lines bear a legend such as 16 representative of 16 lines or a 16 bit bus. Otherwise, the lines are single lines for control signals, such as clock signals and load signals.

The interface control unit receives data from a data source, such as the host computer HC. It is contemplated that the host computer HC will download data in 16 bit segments and provide clocking or strobe pulses for clocking the data into the interface control unit. In this case, the data is transmitted from the data source HC by a 16 bit bus to be loaded into a register 100 when the register is clocked or strobed by a strobe line 102. The strobe line 102 also serves to provide a timing base or master clock which is supplied to a timing generator 104 within the interface control unit. From this, the timing generator 104 can now provide suitable load pulses and other command pulses for its operation. Data to be supplied for entry into the data memory DM includes two 16 bit words to define a total data word of 32 bits in length. One half of this data word or 16 bits may be loaded from the register 100 into a register 106 when the timing generator 104 raises its load line 110 to that register. The other half of this data word is obtained directly from the output of the register 100. The addresses at which the data words are loaded into the data memory DM may be generated by an address counter 108 which may be loaded with an initial address from the 16 bit output of the register 100 upon the raising of a load line 112 which loads the initial address into the counter 108. Thereafter, additional addresses may be generated in an incremental fashion by clock pulses applied to the counter 108 by a clock line 114 from the timing generator 104.

The program memory PM may be loaded with 80 bit instruction words in a manner similar to that of loading the data memory DM.  Thus, each instruction word supplied to the program memory PM is 80 bits in length  or five 16 bit words.  One word may be obtained directly from the output of the register 100 and a second may be obtained from the register 106 when loaded into the register by the timing generator 104 raising its load line 110.  Three additional words of 16 bits each are loaded in the same manner into registers 116, 118 and 120 as the timing generator 104 raises its load lines 122, 124 and 126.  The addresses at which the instruction words are loaded into the program memory PM may be obtained from the address counter 108 in the same manner as discussed hereinabove with respect to addressing the data memory DM.

During the process of writing data into the program memory PM, the interface control unit may raise its write line 10 and this is done by the timing generator 104. Similarly, during the process of writing data into the data memory DM, the interface  control unit raises its write line 12, and again, this is controlled by the timing generator 104.

During the process of loading a sequence of next addresses into the next address registers 40, the interface control unit supplies a shift clock to the shift registers by way of the OR gate 42.  The interface clock IC

0230383

is also obtained from the timing generator 104. Also, during such operation, the interface control unit may raise its run/disable line to turn off the timing generator 24 within the microsequencer MS. This is also obtained from the timing generator 104. As various modes of operation may be desirable, the data source in the form of the host computer HC may transmit mode control commands to a decoder 130 in the interface control unit and these mode conditions are decoded and used to control the timing generator 104 as well as for initially loading an address count in the address counter 108.

The decoding of load control signals as well as the strobe clock signals obtained from the data source may be employed for controlling a timing generator 140 for use in transmitting transformed data back to the host computer HC. In this case, the timing generator 140 outputs a strobe clock on a strobe line 142 for strobing data into the host computer. The data itself is transmitted to the host computer as 16 bit data words. However, the data obtained from the data memory DM is in the form of 32 bit data words. The 32 bits are supplied to the input of a multiplexer 144 which receives clock signals or gating signals from the timing generator 140 and alternately supplies the 16 most significant bits and the 16 least significant bits of each data word to the host computer HC by way of a register 146.

## Summary

From the foregoing, it is seen that the microsequencer MS is configured to control the arithmetic processing unit APU such that the instruction for each set of input data X, Y and Z is pipelined through the arithmetic processing unit with its associated data. In this manner, several different programs can be operated during the pipeline operations by inserting registers, such as the registers 84 and 86, in the pipelines. This permits a single arithmetic logic unit processor to operate as an array of pseudoprocessors. The number of pseudoprocesors in the this array equals the number of pipeline registers in the system. Each of the pseudoprocessors, then, can execute the same program, or totally independent programs. In the example illustrated herein, there are eight pipelined registers corresponding with the eight pipelined instruction registers in the microsequencer MS permitting eight different arithmetic operations to take place on eight different sets of data.

## CLAIMS

1. Apparatus for sequentially performing a plurality of arithmetic operations on each of a plurality of data sets, each including at least two variables, in accordance with an instruction word for each data set, the apparatus comprising:

an arithmetic processing unit (APU) having input register means (70, 72, 74, 76) for receiving and temporarily storing a data set including at least first and second multi-bit digital words (X, Y, Z) representing first and second variables and an associated multi-bit instruction word providing computational instructions for the associated data set, at least first and second interconnected computational pipelines each including a plurality of groups of pipelined arithmetic elements, each group including a plurality of arithmetic elements (e.g. 80X, 80Y, 80Z, 82X, 82Y, 82Z, etc.) arranged to perform a sequence of arithmetic operations on a said data set in accordance with the associated said instruction word, and a resultant register (e.g. 84X, 84Y, 84Z) for temporarily storing the computational results of said group, and an instruction pipeline including a plurality of pipelined instruction registers (84R, 86R), one for each said group, and arranged in a sequence so as to sequentially receive said instruction word as the associated data set is sequentially recieved by said resultant registers (e.g. 84Y, 84X, 84Z); and,

means (DM, PM) for sequentially supplying a plurality of data sets and a like plurality of associated instruction words to the arithmetic processing unit (APU) so that each said instruction word propagates through the processing unit (APU) in sequence with its associated data set.

2. Apparatus according to claim 1, wherein the means for supplying (DM, PM) includes addressable program memory means (PM) for storing a plurality of said instruction words at addressable locations therein and addressable data memory means (DM) for storing a plurality of said data sets at addressable locations therein.

3. Apparatus according to claim 2, including means for addressing the program memory means (PM) to obtain a said instruction word therefrom and means for addressing the data memory means (DM) to obtain a said data set therefrom, and means for supplying a said instruction word along with a said data set to the arithmetic processing unit (APU).

4. Apparatus according to claim 3, wherein the means for addressing the program memory means (PM) includes means for sequentially addressing the program memory means (PM) to obtain a sequence of said instruction words.

5. Apparatus according to claim 4, wherein the means for addressing the data memory means (DM) includes means for sequentially addressing the data memory means (DM) a plurality of times in sequence with said addressing of the program memory means (PM) to obtain said data sets in sequence with said instruction words in such a manner that each instruction word is associated with one of said data sets.

6. Apparatus according to claim 5, wherein the data memory means (DM) includes addressable locations for storing data set results and means for obtaining data set results from the resultant registers (86X, 86Y, 86Z) of the arithmetic processing unit (APU) for storage in the data memory means (DM) at addressable locations therein.

7. Apparatus according to claim 1, wherein the means for supplying (DM, PM) includes program memory means (PM) for storing a plurality of blocks (Fig. 6) of multi-bit digital data words at addressable locations therein, each said block of data words including a next address word for addressing the next location in the program memory means (PM) to obtain the next block of data words, at least one input data address for addressing a data memory means (DM) to obtain therefrom an input data set to be processed by the arithmetic processing unit (APU) and a said instruction word associated with said data set for providing computational instructions for the arithmetic operations to be performed on said instruction set by the arithmetic processing unit (APU).

8. Apparatus according to claim 7, wherein the data memory means (DM) comprises addressable data memory means for storing a plurality of said data sets at addressable locations therein.

9. Apparatus according to claim 8, wherein each said block of data words includes a resultant address word for addressing a location in the data memory means (DM) for storing a resultant data set (R, T) obtained from the arithmetic processing unit (APU).

10. Apparatus according to claim 8, including means (IR, 40) for addressing the program memory means (PM) to obtain a said block of data words therefrom.

11. Apparatus according to claim 10, wherein the addressing means (IR, 40) includes means (40) for sequentially storing a plurality of next address words obtained from corresponding blocks of data words sequentially read from the program memory means (PM) such that the first of said plurality of next address words contains the next address for addressing the program memory means (PM).

12. Apparatus according to claim 11, wherein the number of next address words stored in the next address storing means (40) is at least equal to the number of groups of arithmetic elements in the arithmetic processing unit (APU).

13. Apparatus according to claim 12, including means for sequentially supplying said next address words from the next address storing means (40) to the program memory means (PM) for sequentially addressing blocks of data words therein in accordance with the order in which said next address words were read from the program memory means (PM) and supplied to the next address storing means (40).

14. Apparatus according to claim 13, including skipping means (90, 92, 34) for periodically skipping the supply of a said next address word to the program memory means (PM) as a function of the relative value of the variables in the data set being supplied to the arithmetic processing unit (APU).

15. Apparatus according to claim 14, wherein each said block of data words includes a skip logic word designating one of a plurality of relationships between the variables of a data set that, if achieved, warrants said skipping of the next address word, and wherein the skipping means includes means (90) for comparing the value of two variables of each data set to determine whether one of a plurality of given relationships exists and providing a plurality of outputs in accordance therewith and skip logic means (92) for providing a skip command when one of said outputs corresponds with the designation provided by said skip logic word, and means (34) responsive to a said skip command for effectively skipping the addressing of the program memory means (PM) by the next program memory address word.

FIG.1

HOST COMPUTER — HC

PM — PROGRAM MEMORY

ICU — INTERFACE CONTROL UNIT

DM — DATA MEMORY

ADDRESS

DATA

ADDRESS

DATA

ADDRESS

INSTRUCTIONS

MICROSEQUENCER — MS

ADDRESS

APU — ARITHMETIC PROCESSING UNIT

FIG.3

FROM IR

20

22 — INSTRUCTION DECODER

TO APU

24 — TIMING GENERATOR

RUN/DISABLE

MASTER CLOCK (MC)

READ 1 (Rd 1)

READ 2 (Rd 2)

READ 3 (Rd 3)

WRITE 1 (W-1)

WRITE 2 (W-2)

FIG.4

V

MC

Rd1

Rd2

Rd3

WI

W2

T

FIG.2

2/6

0230383

MASTER CLOCK

MC

IC

ICU

AB-1  ADDRESS

DATA

42

CONTROL ζ 32

34

10  WRITE

CLK

30

NEXT ADDRESS

ADDRESS REGISTERS

M U X

A D D E R

PROGRAM MEMORY

PM

40

"1"

SKIP

CLK

INSTRUCTION REGISTER

IR

FIG.5

| HOST INTERFACE FLAG | | ACU CONTROL | ADDRESS PAGE CONTROL | ADDRESS INDEX CONTROL | SKIP CONDITION SELECT | NEXT ADDRESS | R ADDRESS WRITE | T ADDRESS WRITE | Z ADDRESS READ | Y ADDRESS READ | X ADDRESS READ |
|---|---|---|---|---|---|---|---|---|---|---|---|
| 77 | 76 | 71 | 70  67 | 66  60 | 59  56 | 55  45 | 44  36 | 35  27 | 26  18 | 17  9 | 8  0 |
| 78 | | | | | | | | | | | |
| | FIELD 10 | | FIELD 9 | FIELD 8 | FIELD 7 | FIELD 6 | FIELD 5 | FIELD 4 | FIELD 3 | FIELD 2 | FIELD 1 |

| 1 | 2 | 6 | 4 | 7 | 4 | 11 | 9 | 9 | 9 | 9 | 9 |

BITS

FIG.6

0230383

**FIG.7**

**FIG.9**

FIG.8

FIG.10